# EUROPEAN PATENT APPLICATION

(11) **EP 3 778 178 A1**
(43) Date of publication of application: **17.02.2021**
(21) Application number: 19850572.9
(22) Date of filing: 18.04.2019
(51) Int. Cl.: B29C 45/14, B29C 45/26

(54) **COMPOSITE MATERIAL INJECTION MOLDING METHOD AND COMPOSITE MATERIAL**

(30) Priority: 16.08.2018 JP 2018153216
(71) Applicant: MITSUBISHI HEAVY INDUSTRIES, LTD., Chiyoda-ku, Tokyo 100-8332 (JP)
(72) Inventor: WATANABE, Yasunori, Tokyo 100-8332 (JP); OZAKI, Ryota, Tokyo 100-8332 (JP); SHIMIZU, Masahiko, Tokyo 100-8332 (JP); MANO, Shoya, Tokyo 100-8332 (JP); KAWAMURA, Yusuke, Tokyo 100-8332 (JP); OKABE, Ryoji, Tokyo 100-8332 (JP); IKEDA, Kosuke, Tokyo 100-8332 (JP); NISHIGUCHI, Kiichi, Tokyo 100-8332 (JP)
(74) Representative: Hoffmann Eitle
(86) International application number: PCT/JP2019/016572
(87) International publication number: WO 2020/035974

(57) **Abstract**

The present invention addresses the problem of providing a composite material injection molding method and a composite material with which it is possible to reduce the occurrence of a local deformation in a plate material during solidification and shrinkage of an injection molding material. The composite material injection molding method comprises: an injection step of injecting an injection molding material containing reinforcing fibers onto one surface of a plate material (2); and a molding step of solidifying the injection molding material to mold a frame part (3) so as to surround the outer periphery of the plate material (2) and to mold a rib (4) so as to define an inner peripheral-side space on the inner peripheral side of the frame part (3). In the injection step, the injection molding material is injected so that a weld part (6) at which the injection molding material converges is formed in a region not overlapping the plate material (2) of the frame part (3).

## Description

### Technical Field

The present invention relates to an injection molding method of a composite material and a composite material.

### Background Art

In the related art, an overmolding technique has been known in which a sheet material and an injection molding material formed of a thermoplastic composite material are used, the injection molding material is flowed toward the sheet material by injection molding, and the resin on the surface of the sheet material is remelted and solidified to join the sheet material to the injection molding material. In this technique, the composite material is generally reinforced by disposing the sheet material on the outer surface of a product and molding ribs or the like on the sheet material by injection molding.

As an example of an apparatus used for the above overmolding, for example, those described in PTLs 1 and 2 have been reported. PTL 1 discloses a compression molding apparatus that enables overmolding in which press molding and injection compression molding are combined. PTL 2 discloses a molding apparatus that suppresses dimples on the surface of a sheet material at a gate portion by compressing an injection molded body with a valve pin.

### Citation List

### Patent Literature

[PTL 1] Japanese Patent No. 5072133
[PTL 2] Japanese Patent No. 5765475

### Summary of Invention

### Technical Problem

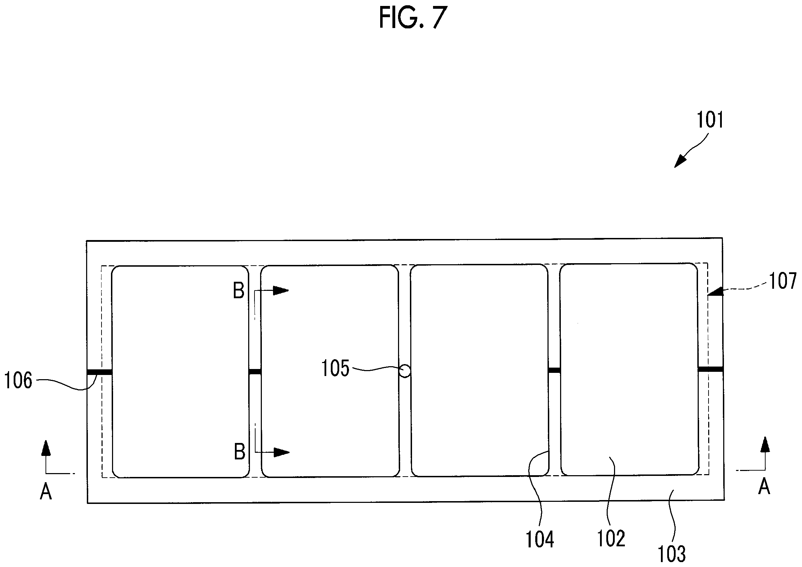

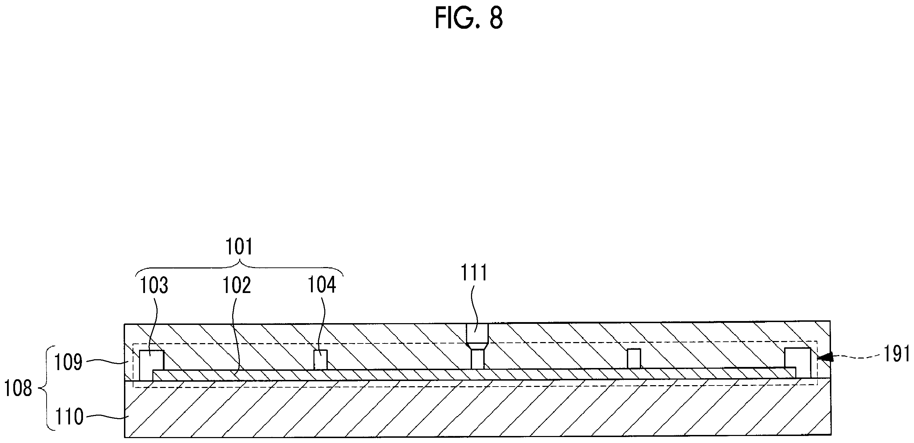

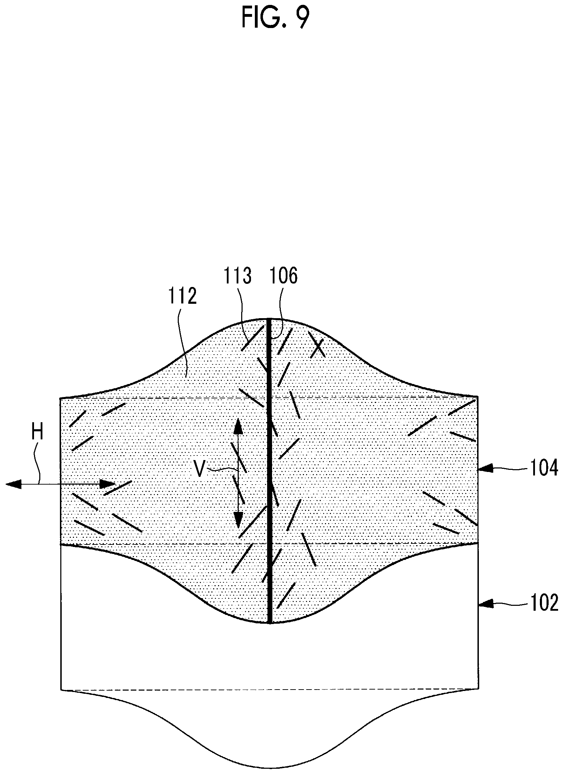

Hereinafter, with reference to Figs. 7 to 9, problems that occur when the above-described overmolding is performed using a thermoplastic composite material containing reinforcing fibers as the injection molding material will be described in more detail. Fig. 7 is a top view illustrating an example of a composite material as a reference example, Fig. 8 is a longitudinal sectional view taken along line A-A when the composite material illustrated in Fig. 7 is disposed in a mold, and Fig. 9 is a longitudinal sectional view taken along line B-B of the composite material illustrated in Fig. 7.

As illustrated in Fig. 7, a composite material 101 includes a sheet material 102, a frame portion 103, and ribs 104. The sheet material 102 is a member made of a metal, resin, or the like, and the frame portion 103 and the ribs 104 are members formed by solidifying an injection molding material containing reinforcing fibers. The frame portion 103 is molded so as to surround the outer periphery of the sheet material 102, and three ribs 104 are molded on the inner peripheral side of the frame portion 103 in parallel to the short sides of the frame portion 103 to divide the space on the inner peripheral side into four. In the rib 104 molded so as to traverse the center portion of the upper surface of the sheet material 102, a gate mark 105 through which the injection molding material is injected is formed at a position corresponding to the center portion. A weld portion 106 where the injection molding material joins is formed at each of the central part between of the two ribs 104 where the gate mark 105 is not formed and in the central parts of the short sides of the frame portion 103. Reference numeral 107 in Fig. 7 denotes the outline of the sheet material 102.

Next, a molding mold used for injection molding of the composite material 101 illustrated in Fig. 7 will be described with reference to Fig. 8. The molding mold 108 illustrated in Fig. 8 includes an upper mold 109 and a lower mold 110. A gate 111 for injecting the injection molding material is provided in the center portion of the surface of the upper mold 109 facing the lower mold 110 so as to penetrate through the upper mold 109. A cavity 191 corresponding to the shape of the composite material 101 is provided on the surface of the upper mold 109 facing the lower mold 110. In the cavity 191, the depth of portions where the frame portion 103 and the ribs 104 are molded is larger than the depths of other portions (portions where the frame portion 103 and the ribs 104 are not molded on the sheet material 102) toward the upper mold 109 side.

Fig. 9 is a longitudinal sectional view taken along line B-B of the composite material illustrated in Fig. 7 (that is, a longitudinal sectional view of the composite material in the vicinity of the weld portion). As illustrated in Fig. 9, the rib 104 is molded in a state where an injection molding material containing a resin 112 and reinforcing fibers 113 is solidified and joined onto the sheet material 102. Dotted lines in Fig. 9 indicate the outlines of the sheet material 102 and the ribs 104 before solidification molding.

As illustrated in Fig. 9, the reinforcing fibers 113 contained in the injection molding material (the resin 112) are oriented in a flow direction of the resin 112 (direction indicated by double-headed arrow H in Fig. 9) in portions except for the weld portion 106, whereas the reinforcing fibers 113 are oriented in a direction orthogonal to the flow direction of the resin 112 (direction indicated by double-headed arrow V in Fig. 9) in the weld portion 106. In the weld portion 106, the amount of solidification shrinkage in the fiber direction (direction indicated by the double-headed arrow V in Fig. 9) in the injection molding material is smaller than that of the portions except for the weld portion 106, so that the surface of the injection molding material (the rib 104) after the solidification becomes convex. In a case where the sheet thickness of the sheet material 102 is small, in a process in which a molded product (composite material) is taken out from the molding mold and the molded product is cooled to room temperature, the injection molding material solidifies, and there is concern that local deformation (deflection) of the sheet material 102 may occur following the solidification shrinkage of the injection molding material as illustrated in Fig. 9. At present, no particular attention has been paid to such local deformation.

The present invention has been made in view of such circumstances, and an object thereof is to provide an injection molding method of a composite material and a composite material capable of suppressing the occurrence of local deformation of a sheet material during solidification shrinkage of an injection molding material.

### Solution to Problem

In order to solve the above problems, the present invention employs the following means.

The present invention provides an injection molding method of a composite material, including: an injection step of injecting an injection molding material containing reinforcing fibers to one surface of a sheet material; and a molding step of solidifying the injection molding material to mold a frame portion so as to surround an outer periphery of the sheet material, and mold a rib on an inner peripheral side of the frame portion so as to divide a space on the inner peripheral side, in which, in the injection step, the injection molding material is injected so that a weld portion where the injection molding material joins is formed in a region of the frame portion that does not overlap the sheet material.

In the injection molding method of the composite material of the present invention, in the injection step, the injection molding material is injected so that the weld portion where the injection molding material joins is formed in the region of the frame portion that does not overlap the sheet material (for example, a region of the frame portion extending outward from the outline of the sheet material when the composite material is viewed from above, such as the junction of the frame portion and the rib or the four corners of the frame portion). The reinforcing fibers contained in the injection molding material (molten resin) are oriented in a flow direction of the resin in portions except for the weld portion, whereas the reinforcing fibers are oriented in a direction orthogonal to the flow direction of the resin in the weld portion. In the weld portion, the amount of solidification shrinkage in a fiber direction in the injection molding material is smaller than that of the portions except for the weld portion, so that the surface of the injection molding material after the solidification becomes convex. In a case where the sheet thickness of the sheet material is small, there is concern that local deformation (deflection) of the sheet material may occur following the solidification shrinkage of the injection molding material. On the other hand, as in the present invention, in the injection step, by injecting the injection molding material so that the weld portion is formed in the region of the frame portion that does not overlap the sheet material, it is possible to suppress the formation of the weld portion on the region that overlaps the sheet material. Accordingly, it is possible to suppress the occurrence of local deformation of the sheet material during solidification shrinkage of the injection molding material.

The present invention provides an injection molding method of a composite material, including: an injection step of injecting an injection molding material containing reinforcing fibers to one surface of a sheet material; and a molding step of solidifying the injection molding material to mold a frame portion so as to surround an outer periphery of the sheet material, and mold a rib on an inner peripheral side of the frame portion so as to divide a space on the inner peripheral side, in which, in the molding step, a thin film portion thinner than thicknesses of the frame portion and the rib is molded on an entire surface of the one surface of the sheet material except for a region where the frame portion and the rib are molded.

In the injection molding method of a composite material of the present invention, in the molding step, the thin film portion thinner than the thicknesses of the frame portion and the rib is molded on the entire surface of the one surface of the sheet material except for the region where the frame portion and the rib are molded. Accordingly, since the composite material can be molded so that the weld portion where the injection molding material joins is not formed, it is possible to suppress the formation of the weld portion on the region overlapping the sheet material. Therefore, it is possible to suppress the occurrence of local deformation of the sheet material during solidification shrinkage of the injection molding material.

It is preferable that in the molding step, a bypass rib that bridges the frame portion and the rib is molded.

By molding the bypass rib bridging the frame portion and the rib, the position of the weld portion where the injection molding material joins can be easily adjusted. Accordingly, the composite material can be molded so that the weld portion is formed in the region of the frame portion that does not overlap the sheet material.

It is preferable that in the injection step, the injection molding material is injected from a plurality of gates to the one surface of the sheet material.

With the configuration in which the injection molding material is injected from the plurality of gates toward the one surface of the sheet material, the position of the weld portion where the injection molding material joins can be easily adjusted. Accordingly, the composite material can be molded so that the weld portion is formed in the region of the frame portion that does not overlap the sheet material.

It is preferable that in the injection step, the injection molding material is injected toward a center portion of the one surface of the sheet material.

By injecting the injection molding material from the gate toward the center portion of the one surface of the sheet material, the injection molding material can be evenly distributed over the entire surface of the sheet material. Accordingly, the composite material can be efficiently injection-molded.

The present invention provides a composite material including: a sheet material; a frame portion which is molded so as to surround an outer periphery of the sheet material, and is formed by solidifying an injection molding material containing reinforcing fibers; and a rib which is molded on an inner peripheral side of the frame portion so as to divide a space on the inner peripheral side, and is formed by solidifying the injection molding material containing the reinforcing fibers, in which a weld portion where the injection molding material joins is formed in a region of the frame portion that does not overlap the sheet material.

In the composite material of the present invention, the weld portion where the injection molding material joins is formed in the region of the frame portion that does not overlap the sheet material (for example, a region of the frame portion extending outward from the outline of the sheet material when the composite material is viewed from above, such as the junction of the frame portion and the rib or the four corners of the frame portion). The reinforcing fibers contained in the injection molding material (molten resin) are oriented in a flow direction of the resin in portions except for the weld portion, whereas the reinforcing fibers are oriented in a direction orthogonal to the flow direction of the resin in the weld portion. In the weld portion, the amount of solidification shrinkage in a fiber direction in the injection molding material is smaller than that of the portions except for the weld portion, so that the surface of the injection molding material after the solidification becomes convex. In a case where the sheet thickness of the sheet material is small, there is concern that local deformation (deflection) of the sheet material may occur following the solidification shrinkage of the injection molding material. On the other hand, as in the present invention, since the weld portion is formed in the region of the frame portion that does not overlap the sheet material, it is possible to suppress the formation of the weld portion on the surface of the sheet material. Accordingly, it is possible to suppress the occurrence of local deformation of the sheet material during solidification shrinkage of the injection molding material.

The present invention provides a composite material including: a sheet material; a frame portion which is molded so as to surround an outer periphery of the sheet material, and is formed by solidifying an injection molding material containing reinforcing fibers; and a rib which is molded on an inner peripheral side of the frame portion so as to divide a space on the inner peripheral side, and is formed by solidifying the injection molding material containing the reinforcing fibers, in which a thin film portion thinner than thicknesses of the frame portion and the rib is molded on an entire surface of one surface of the sheet material except for a region where the frame portion and the rib are molded.

In the composite material of the present invention, the thin film portion thinner than the thicknesses of the frame portion and the rib is formed on the entire surface of the one surface of the sheet material except for the region where the frame portion and the rib are molded. Accordingly, since the composite material can be molded so that the weld portion where the injection molding material joins is not formed, it is possible to suppress the formation of the weld portion on the region overlapping the sheet material. Therefore, it is possible to suppress the occurrence of local deformation of the sheet material during solidification shrinkage of the injection molding material.

It is preferable that a bypass rib that bridges the frame portion and the rib is molded.

By molding the injection molding material so that the bypass rib bridging the frame portion and the rib is formed, the position of the weld portion where the injection molding material joins can be easily adjusted. Accordingly, the composite material can be molded so that the weld portion is formed in the region of the frame portion that does not overlap the sheet material.

It is preferable that a plurality of gate marks through which the injection molding material is injected are formed in the frame portion, the rib, or both thereof.

With the configuration in which the injection molding material is injected from the plurality of gates toward the one surface of the sheet material, the position of the weld portion where the injection molding material joins can be easily adjusted. Accordingly, the composite material can be molded so that the weld portion is formed in the region of the frame portion that does not overlap the sheet material.

It is preferable that the rib is molded so as to traverse a center portion of one surface of the sheet material, and a gate mark through which the injection molding material is injected is formed at a position corresponding to the center portion of the rib.

By injecting the injection molding material from the gate toward the center portion of the one surface of the sheet material, the injection molding material can be evenly distributed over the entire surface of the sheet material. Accordingly, the composite material can be efficiently injection-molded.

### Advantageous Effects of Invention

According to the injection molding method of the composite material and the composite material of the present invention, it is possible to suppress the occurrence of local deformation of the sheet material during solidification shrinkage of the injection molding material.

### Brief Description of Drawings

Fig. 1 is a top view of a composite material according to a first embodiment of the present invention.
Fig. 2 is a longitudinal sectional view taken along line A-A when the composite material illustrated in Fig. 1 is disposed in a mold.
Fig. 3 is a top view of a composite material according to a second embodiment of the present invention.
Fig. 4 is a longitudinal sectional view taken along line A-A when the composite material illustrated in Fig. 3 is disposed in a mold.
Fig. 5 is a top view of a composite material according to a third embodiment of the present invention.
Fig. 6 is a longitudinal sectional view taken along line A-A when the composite material illustrated in Fig. 5 is disposed in a mold.
Fig. 7 is a top view illustrating an example of a composite material as a reference example.
Fig. 8 is a longitudinal sectional view taken along line A-A when the composite material illustrated in Fig. 7 is disposed in a mold.
Fig. 9 is a longitudinal sectional view taken along line B-B of the composite material illustrated in Fig. 7.

### Description of embodiments

Hereinafter, an embodiment of a composite material and an injection molding method of a composite material according to the present invention will be described with reference to the drawings.

### [First Embodiment]

### [Composite Material]

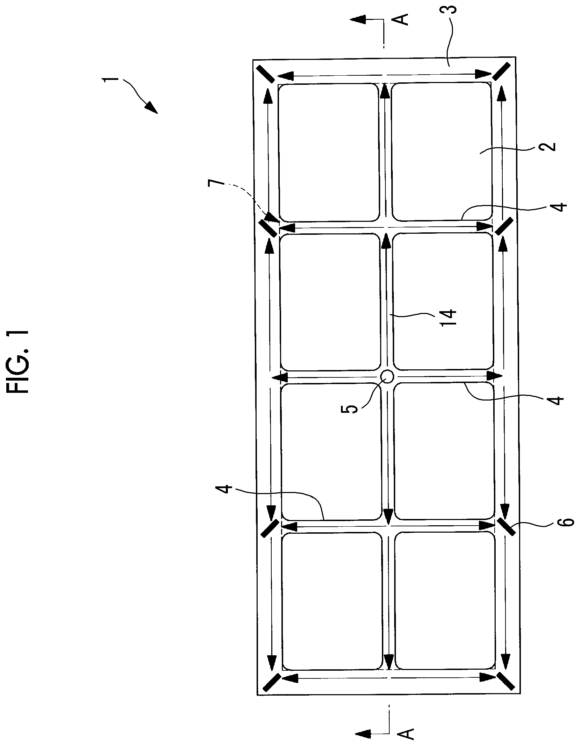

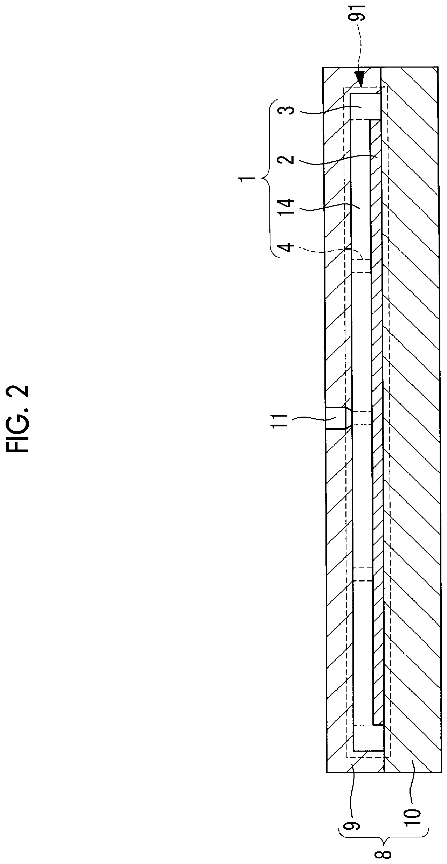

Hereinafter, a composite material and an injection molding method thereof according to a first embodiment of the present invention will be described with reference to Figs. 1 and 2.

First, the composite material according to the present embodiment will be described.

Fig. 1 is a top view of the composite material according to the present embodiment.

As illustrated in Fig. 1, a composite material 1 according to the present embodiment includes a sheet material 2, a frame portion 3, ribs 4, and a bypass rib 14. Reference numeral 7 in Fig. 1 denotes the outline of the sheet material 2.

The frame portion 3 is molded so as to surround the outer periphery of the sheet material 2, and is molded so as to extend outward from the outline 7 of the sheet material 2 when the composite material 1 is viewed from above. Three ribs 4 are molded on the inner peripheral side of the frame portion 3 in parallel to the short sides of the frame portion 3 so as to divide the space on the inner peripheral side. One bypass rib 14 is molded in parallel to the long side of the frame portion 3 so as to bridge the frame portion 3 and the ribs 4. The frame portion 3, the ribs 4, and the bypass rib 14 are integrally molded by solidifying an injection molding material containing reinforcing fibers. In the rib 4 molded so as to traverse the center portion of the upper surface of the sheet material 2, a gate mark 5 through which the injection molding material is injected is formed in an annular shape at a position corresponding to the center portion. A weld portion 6 where the injection molding material joins is formed at each of the junctions of the two ribs 4 where the gate mark 5 is not formed and the frame portion 3 and the four corners of the frame portion 3. That is, the weld portions 6 are formed in regions of the frame portion 3 that do not overlap the sheet material 2. In addition, arrows extending from the gate mark 5 in Fig. 1 denote the direction in which the injection molding material flows.

The sheet material 2 is a member made of, for example, a metal or resin, and specifically, a member (laminated sheet) formed by laminating a plurality of base materials made of a thermoplastic resin composite material containing reinforcing fibers. As the reinforcing fiber, for example, a continuous fiber having a diameter of about 10 µm is applied. The sheet thickness of the sheet material 2 is not particularly limited, but is preferably 1 to 10 mm, for example, about 2 mm.

The frame portion 3, the ribs 4, and the bypass rib 14 are members molded by solidifying an injection molding material containing reinforcing fibers (for example, a thermoplastic resin composite material), and as the reinforcing fiber, for example, a fiber having a diameter of about 10 µm and a length of about 0.2 to 0.3 mm is applied. The thickness (height) of the ribs 4 and the bypass rib 14 is not particularly limited, but is preferably 10 to 120 mm, for example, about 25 mm. The length of the width of the ribs 4 and the bypass rib 14 (length in a direction orthogonal to the direction in which the injection molding material in Fig. 1 flows) is not particularly limited, but is preferably 1 to 10 mm, for example, about 5 mm.

Next, a molding mold used for injection molding of the composite material 1 according to the present embodiment will be described with reference to Fig. 2. The molding mold 8 illustrated in Fig. 2 includes an upper mold 9 and a lower mold 10. A gate 11 for injecting the injection molding material is provided in the center portion of the surface of the upper mold 9 facing the lower mold 10 so as to penetrate through the upper mold 9. A cavity 91 corresponding to the shape of the composite material 1 is provided on the surface of the upper mold 9 facing the lower mold 10. In the cavity 91, the depth of portions where the frame portion 3, the ribs 4, and the bypass rib 14 are molded is larger than the depths of other portions (portions where the frame portion 3, the ribs 4, and the bypass rib 14 are not molded on the sheet material 2) toward the upper mold 9 side.

With the configuration described above, according to the present embodiment, the following operational effects are exhibited.

In the composite material 1 of the present embodiment, the weld portions 6 where the injection molding material joins are formed in regions of the frame portion 3 that do not overlap the sheet material 2 (for example, regions of the frame portion 3 extending outward from the outline 7 of the sheet material 2 when the composite material 1 is viewed from above, such as the junction of the frame portion 3 and the ribs 4 or the four corners of the frame portion 3). As in the present embodiment, since the weld portions 6 are formed in the regions of the frame portion 3 that do not overlap the sheet material 2, it is possible to suppress the formation of the weld portion 6 on the surface of the sheet material 2. Accordingly, it is possible to suppress the occurrence of local deformation of the sheet material 2 during solidification shrinkage of the injection molding material.

In the present embodiment, one bypass rib 14 parallel to the long side of the frame portion 3 is molded so as to bridge the frame portion 3 and the ribs 4. By molding the injection molding material so that the bypass rib 14 bridging the frame portion 3 and the ribs 4 is formed, the position of the weld portion 6 where the injection molding material joins can be easily adjusted. Accordingly, the composite material 1 can be molded so that the weld portions 6 are formed in the regions of the frame portion 3 which do not overlap the sheet material 2. The number of bypass ribs 14 is not limited to one, and may be two or more.

In the present embodiment, one rib 4 is molded so as to traverse the center portion of one surface of the sheet material 2, and at a position in the rib 4 corresponding to the center portion of the one surface of the sheet material 2, the gate mark 5 through which the injection molding material is injected is formed. That is, the injection molding material is injected from the gate 11 toward the center portion of the one surface of the sheet material 2. In this case, the injection molding material can be evenly distributed over the entire surface of the sheet material 2. Accordingly, the composite material 1 can be efficiently injection-molded.

In the present embodiment, the case where the weld portions 6 are formed at the junctions of the frame portion 3 and the ribs 4 and the four corners of the frame portion 3 has been described as an example, but the weld portions 6 are not limited thereto. The weld portion 6 may be formed only at the junction of the frame portion 3 and the ribs 4, may be formed only at the four corners of the frame portion 3, or may be formed at a place except for these. That is, in the present invention, the weld portions 6 need only be formed in regions of the frame portion 3 that do not overlap the sheet material 2.

### [Injection Molding Method of Composite Material]

Next, the injection molding method of the composite material according to the present embodiment will be described.

Hereinafter, a case where the composite material 1 is injection-molded by using the molding mold 8 illustrated in Fig. 2 will be described as an example, but the injection molding method is not limited thereto.

### (Injection Step)

In an injection step, the injection molding material containing reinforcing fibers is injected to the upper surface of the sheet material 2 disposed on the surface of the lower mold 10 facing the upper mold 9 from the gate 11 toward the center portion of the upper surface of the sheet material 2. At this time, the injection molding material is injected so that the weld portion 6 where the injection molding material joins is formed in a region of the frame portion 3 to be molded that does not overlap the sheet material 2.

### (Molding Step)

In a molding step, the injection molding material is solidified to mold the frame portion 3 so as to surround the outer periphery of the sheet material 2, and mold the ribs 4 on the inner peripheral side of the frame portion 3 so as to divide the space on the inner peripheral side as illustrated in Fig. 1. At the same time, the bypass rib 14 bridging the frame portion 3 and the ribs 4 is also molded.

With the configuration described above, according to the present embodiment, the following operational effects are exhibited.

In the injection molding method of the composite material 1 of the present embodiment, in the injection step, the injection molding material is injected so that the weld portions 6 where the injection molding material joins are formed in the regions of the frame portion 3 that do not overlap the sheet material 2 (for example, regions of the frame portion 3 extending outward from the outline 7 of the sheet material 2 when the composite material 1 is viewed from above, such as the junction of the frame portion 3 and the ribs 4 or the four corners of the frame portion 3). As in the present embodiment, in the injection step, by injecting the injection molding material so that the weld portions 6 are formed in the regions of the frame portion 3 that do not overlap the sheet material 2, it is possible to suppress the formation of the weld portion 6 on a region overlapping the sheet material 2. Accordingly, it is possible to suppress the occurrence of local deformation of the sheet material 2 during solidification shrinkage of the injection molding material.

In the present embodiment, in the molding step, one bypass rib 14 parallel to the long side of the frame portion 3 is molded so as to bridge the frame portion 3 and the ribs 4. By molding the bypass rib 14 bridging the frame portion 3 and the ribs 4 in this manner, the position of the weld portion 6 where the injection molding material joins can be easily adjusted. Accordingly, the composite material 1 can be molded so that the weld portions 6 are formed in the regions of the frame portion 3 which do not overlap the sheet material 2.

In the present embodiment, in the injection step, the injection molding material is injected toward the center portion of the one surface of the sheet material 2. As described above, by injecting the injection molding material from the gate 11 toward the center portion of the one surface of the sheet material 2, the injection molding material can be evenly distributed over the entire surface of the sheet material 2. Accordingly, the composite material 1 can be efficiently injection-molded.

### [Second Embodiment]

### [Composite Material]

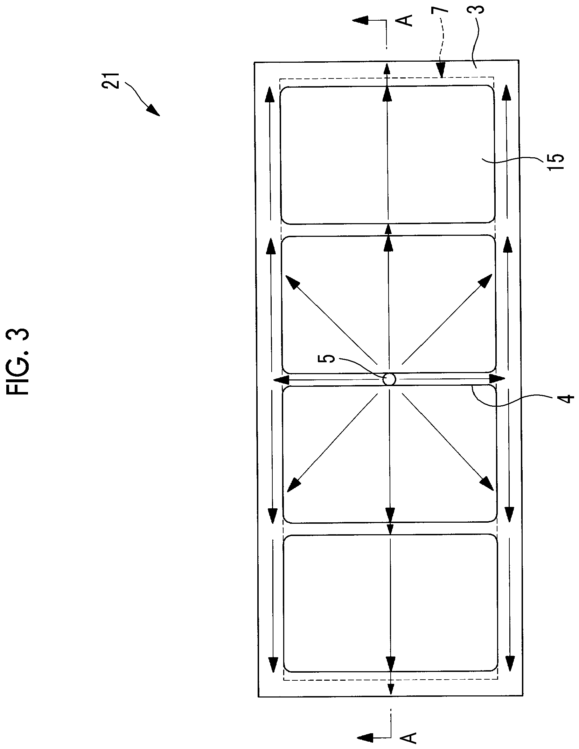

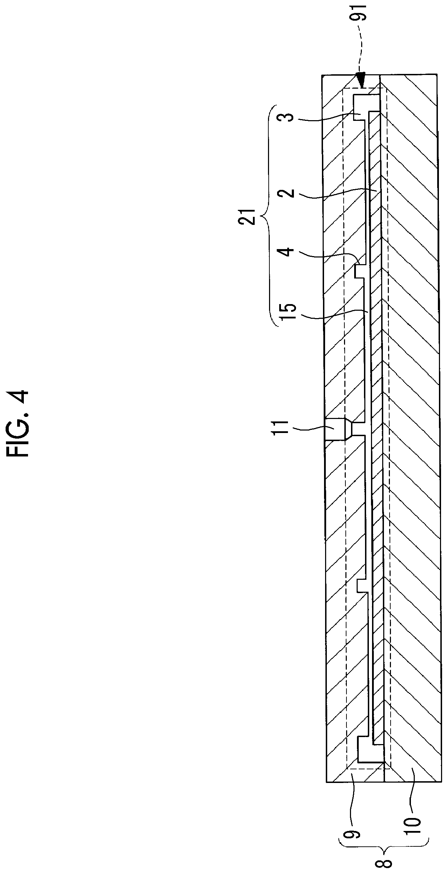

Next, a composite material and an injection molding method thereof according to a second embodiment of the present invention will be described with reference to Figs. 3 and 4.

First, the composite material according to the present embodiment will be described.

The basic configuration of the present embodiment is basically the same as that of the first embodiment, but the present embodiment is different from the first embodiment in that instead of molding the bypass rib 14, a thin film portion 15 thinner than the thickness of the frame portion 3 and the ribs 4 is molded on the entire surface of the one surface of the sheet material 2 except for the regions where the frame portion 3 and the ribs 4 are molded. Therefore, in the present embodiment, the difference will be described, and the description of other redundant parts will be omitted.

Like constituent elements the same as those in the first embodiment are denoted by like reference numerals, and the redundant description thereof will be omitted.

Fig. 3 is a top view of a composite material 21 according to the present embodiment. As illustrated in Fig. 3, the thin film portion 15 thinner than the thickness of the frame portion 3 and the ribs 4 is molded on the entire surface of the one surface (upper surface) of the sheet material 2 except for the regions where the frame portion 3 and the ribs 4 are molded. In the composite material 21, as illustrated in Fig. 3, the weld portion 6 formed in the composite material 1 of the first embodiment is not formed. Arrows extending from the gate mark 5 in Fig. 3 indicate the direction in which the injection molding material flows.

The thin film portion 15 is a member molded by solidifying the injection molding material containing reinforcing fibers (for example, a thermoplastic resin composite material), like the frame portion 3 and the ribs 4, and is molded integrally with the frame portion 3 and the ribs 4. The thickness of the thin film portion 15 is not particularly limited as long as the thin film portion 15 is thinner than the thickness of the frame portion 3 and the ribs 4, but is preferably 0.1 to 10 mm, for example, about 1 mm.

Next, a molding mold used for injection molding of the composite material 21 according to the present embodiment will be described with reference to Fig. 4. The molding mold 8 illustrated in Fig. 4 includes the upper mold 9 and the lower mold 10. The gate 11 for injecting the injection molding material is provided in the center portion of the surface of the upper mold 9 facing the lower mold 10 so as to penetrate through the upper mold 9. The cavity 91 corresponding to the shape of the composite material 21 is provided on the surface of the upper mold 9 facing the lower mold 10. In the cavity 91, the depth of portions where the frame portion 3 and the ribs 4 are molded on the sheet material 2 is larger than the depth of a portion where the thin film portion 15 is molded toward the upper mold 9 side.

With the configuration described above, according to the present embodiment, the following operational effects are exhibited.

In the composite material 21 of the present embodiment, the thin film portion 15 thinner than the thickness of the frame portion 3 and the ribs 4 is formed on the entire surface of the one surface of the sheet material 2 except for the regions where the frame portion 3 and the ribs 4 are molded. Accordingly, since the composite material 21 is molded so that the weld portion 6 where the injection molding material joins is not formed, it is possible to suppress the formation of the weld portion 6 on the region overlapping the sheet material 2. Therefore, it is possible to suppress the occurrence of local deformation of the sheet material 2 during solidification shrinkage of the injection molding material.

In the present embodiment, although the case where the frame portion 3 having a rectangular shape is molded has been described as an example, the end portions of the four sides (four corners) of the frame portion 3 may be omitted.

### [Injection Molding Method of Composite Material]

Next, the injection molding method of the composite material according to the present embodiment will be described.

Hereinafter, a case where the composite material 21 is injection-molded by using the molding mold 8 illustrated in Fig. 4 will be described as an example, but the injection molding method is not limited thereto.

### (Injection Step)

In an injection step, the injection molding material containing reinforcing fibers is injected to the upper surface of the sheet material 2 disposed on the surface of the lower mold 10 facing the upper mold 9 from the gate 11 toward the center portion of the upper surface of the sheet material 2.

### (Molding Step)

In a molding step, the injection molding material is solidified to mold the frame portion 3 so as to surround the outer periphery of the sheet material 2, and mold the ribs 4 on the inner peripheral side of the frame portion 3 so as to divide the space on the inner peripheral side as illustrated in Fig. 3. At the same time, the thin film portion 15 thinner than the thickness of the frame portion 3 and the ribs 4 is molded on the entire surface of the one surface (upper surface) of the sheet material 2 except for the regions where the frame portion 3 and the ribs 4 are molded.

With the configuration described above, according to the present embodiment, the following operational effects are exhibited.

In the injection molding method of the composite material 21 of the present embodiment, in the molding step, the thin film portion 15 thinner than the thickness of the frame portion 3 and the ribs 4 is molded on the entire surface of the one surface of the sheet material 2 except for the regions where the frame portion 3 and the ribs 4 are molded. Accordingly, since the composite material 21 can be molded so that the weld portion 6 where the injection molding material joins is not formed, it is possible to suppress the formation of the weld portion 6 on a region overlapping the sheet material 2. Therefore, it is possible to suppress the occurrence of local deformation of the sheet material 2 during solidification shrinkage of the injection molding material.

After performing the above-mentioned molding step, a step of cutting the end portions of the four sides (four corners) of the frame portion 3 may be additionally performed.

### [Third Embodiment]

### [Composite Material]

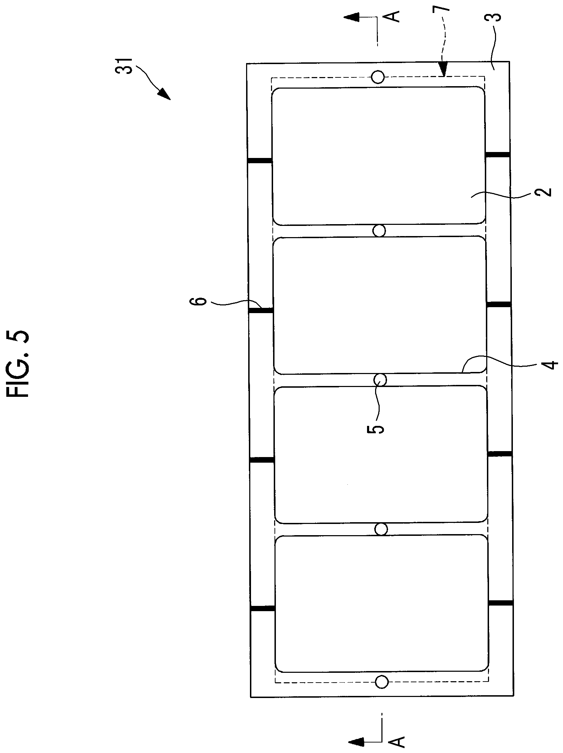

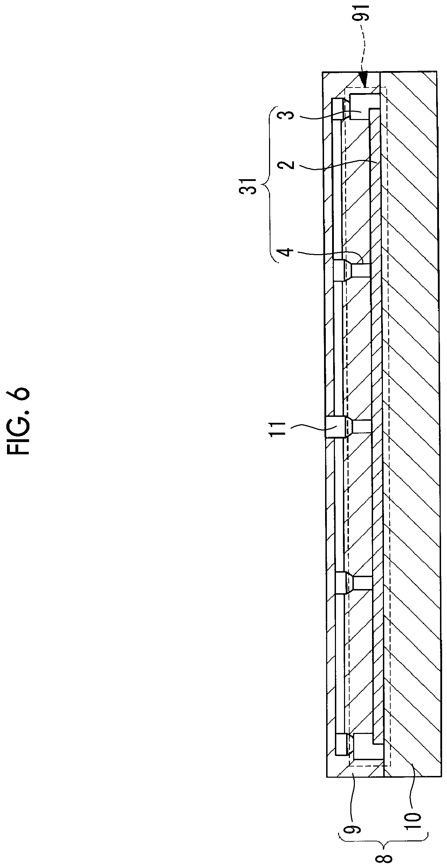

Next, a composite material and an injection molding method thereof according to a third embodiment of the present invention will be described with reference to Figs. 5 and 6.

First, the composite material according to the present embodiment will be described.

The basic configuration of the present embodiment is basically the same as that of the first embodiment, but the present embodiment is different from the first embodiment in that instead of molding the bypass rib 14, a plurality of gate marks 5 through which the injection molding material is injected are formed. Therefore, in the present embodiment, the difference will be described, and the description of other redundant parts will be omitted.

Like constituent elements the same as those in the first embodiment are denoted by like reference numerals, and the redundant description thereof will be omitted.

Fig. 5 is a top view of a composite material 31 according to the present embodiment. As illustrated in Fig. 5, in the composite material 31, five gate marks 5 through which the injection molding material is injected are formed on both the frame portion 3 and the ribs 4. Specifically, one gate mark 5 is formed at each of the midpoints of the three ribs 4 and the midpoints of the two short sides of the frame portion 3. Four weld portions 6 are formed on each of the two long sides of the frame portion 3 at equal intervals.

Next, a molding mold used for injection molding of the composite material 31 according to the present embodiment will be described with reference to Fig. 6. The molding mold 8 illustrated in Fig. 6 includes the upper mold 9 and the lower mold 10. On the surface of the upper mold 9 facing the lower mold 10, five gates 11 for injecting the injection molding material are provided including the center portion at equal intervals to penetrate through the upper mold 9. The cavity 91 corresponding to the shape of the composite material 31 is provided on the surface of the upper mold 9 facing the lower mold 10. In the cavity 91, the depth of portions where the frame portion 3 and the ribs 4 are molded is larger than the depths of other portions (portions where the frame portion 3 and the ribs 4 are not molded on the sheet material 2) toward the upper mold 9 side.

With the configuration described above, according to the present embodiment, the following operational effects are exhibited.

In the composite material 31 of the present embodiment, a plurality of gate marks 5 through which the injection molding material is injected are formed on both the frame portion 3 and the ribs 4. As described above, with the configuration in which the plurality of gate marks 5 are formed in the composite material 31 (that is, the injection molding material is injected from a plurality of gates 11 toward the one surface of the sheet material 2), the position of the weld portion 6 where the injection molding material joins can be easily adjusted. Accordingly, the composite material 31 can be molded so that the weld portions 6 are formed in the regions of the frame portion 3 which do not overlap the sheet material 2.

### [Injection Molding Method of Composite Material]

Next, an embodiment of the injection molding method of the composite material of the present invention will be described.

Hereinafter, a case where the composite material 31 is injection-molded by using the molding mold 8 illustrated in Fig. 6 will be described as an example, but the injection molding method is not limited thereto.

### (Injection Step)

In an injection step, the injection molding material containing reinforcing fibers is injected from the five gates 11 toward the upper surface of the sheet material 2 disposed on the surface of the lower mold 10 facing the upper mold 9. At this time, the injection molding material is injected so that the weld portions 6 where the injection molding material joins are formed in the regions of the frame portion 3 that do not overlap the sheet material 2.

### (Molding Step)

In a molding step, the injection molding material is solidified to mold the frame portion 3 so as to surround the outer periphery of the sheet material 2, and mold the ribs 4 on the inner peripheral side of the frame portion 3 so as to divide the space on the inner peripheral side as illustrated in Fig. 5.

With the configuration described above, according to the present embodiment, the following operational effects are exhibited.

In the injection molding method of the composite material 31 of the present embodiment, in the injection step, the injection molding material is injected so that the weld portions 6 where the injection molding material joins are formed in the regions of the frame portion 3 that do not overlap the sheet material 2. As in the present embodiment, in the injection step, by injecting the injection molding material so that the weld portions 6 are formed in the regions of the frame portion 3 that do not overlap the sheet material 2, it is possible to suppress the formation of the weld portion 6 on a region overlapping the sheet material 2. Accordingly, it is possible to suppress the occurrence of local deformation of the sheet material 2 during solidification shrinkage of the injection molding material.

As in the present embodiment, with the configuration in which the injection molding material is injected from the plurality of gates 11 toward the one surface of the sheet material 2, the position of the weld portion 6 where the injection molding material joins can be easily adjusted. Accordingly, the composite material 31 can be molded so that the weld portions 6 are formed in the regions of the frame portion 3 which do not overlap the sheet material 2.

The composite material of the present invention as described above can be suitably applied to, for example, the skin of an aircraft. Since the surface of the composite material of the present invention has sufficient smoothness, even if the composite material is used as the skin of an aircraft, air resistance during navigation can be sufficiently reduced.

In the embodiment of the composite material and the injection molding method of the composite material of the present invention described above, although the case where three ribs 4 are molded has been described as an example, the ribs 4 are not limited thereto. Specifically, the number of ribs 4 is not limited to three, and may be one, two, or four or more.

In the embodiment of the composite material and the injection molding method of the composite material of the present invention described above, although the case where the ribs 4 and the bypass rib 14 are linearly molded so as to be parallel to the long sides and the short sides of the frame portion 3 has been described as an example, the ribs 4 and the bypass rib 14 are not limited thereto. Specifically, the ribs 4 and the bypass rib 14 may be molded so as to diagonally traverse the space on the inner peripheral side of the frame portion 3. The ribs 4 and the bypass rib 14 may be molded in zigzag.

In the embodiment of the composite material and the injection molding method of the composite material of the present invention described above, although the case where the gate 11 for injecting the injection molding material is provided in the center portion of the surface of the upper mold 9 facing the lower mold 10 (the position corresponding to the center portion of the upper surface of the sheet material 2) has been described as an example, the gate 11 is not limited thereto. That is, the gate 11 does not necessarily have to be provided at the position corresponding to the center portion of the upper surface of the sheet material 2 in the upper mold 9. The flow velocity of the injection molding material can be changed by adjusting the flow passage area of the injection molding material by changing the thickness of the rib 4 and the like, and thus the position of the weld portion 6 can be appropriately adjusted. Therefore, even if the gate 11 is not necessarily provided at the position corresponding to the center portion of the upper surface of the sheet material 2 of the upper mold 9, it is possible to inject the injection molding material so that the weld portions 6 are formed in the regions of the frame portion 3 that do not overlap the sheet material 2.

### Reference Signs List

- 1, 21, 31:: Composite material
- 2:: Sheet material
- 3:: Frame portion
- 4:: Rib
- 5:: Gate mark
- 6:: Weld portion
- 7:: Outline of sheet material
- 8:: Molding mold
- 9:: Upper mold
- 10:: Lower mold
- 11:: Gate
- 14:: Bypass rib
- 15:: Thin film portion
- 91:: Cavity

## Claims

1. An injection molding method of a composite material, comprising:
an injection step of injecting an injection molding material containing reinforcing fibers to one surface of a sheet material; and
a molding step of solidifying the injection molding material to mold a frame portion so as to surround an outer periphery of the sheet material, and mold a rib on an inner peripheral side of the frame portion so as to divide a space on the inner peripheral side,
wherein, in the injection step, the injection molding material is injected so that a weld portion where the injection molding material joins is formed in a region of the frame portion that does not overlap the sheet material.

2. An injection molding method of a composite material, comprising:
an injection step of injecting an injection molding material containing reinforcing fibers to one surface of a sheet material; and
a molding step of solidifying the injection molding material to mold a frame portion so as to surround an outer periphery of the sheet material, and mold a rib on an inner peripheral side of the frame portion so as to divide a space on the inner peripheral side,
wherein, in the molding step, a thin film portion thinner than thicknesses of the frame portion and the rib is molded on an entire surface of the one surface of the sheet material except for a region where the frame portion and the rib are molded.

3. The injection molding method of a composite material according to claim 1,
wherein, in the molding step, a bypass rib that bridges the frame portion and the rib is molded.

4. The injection molding method of a composite material according to claim 1,
wherein, in the injection step, the injection molding material is injected from a plurality of gates to the one surface of the sheet material.

5. The injection molding method of a composite material according to any one of claims 1 to 4,
wherein, in the injection step, the injection molding material is injected toward a center portion of the one surface of the sheet material.

6. A composite material comprising:
a sheet material;
a frame portion which is molded so as to surround an outer periphery of the sheet material, and is formed by solidifying an injection molding material containing reinforcing fibers; and
a rib which is molded on an inner peripheral side of the frame portion so as to divide a space on the inner peripheral side, and is formed by solidifying the injection molding material containing the reinforcing fibers,
wherein a weld portion where the injection molding material joins is formed in a region of the frame portion that does not overlap the sheet material.

7. A composite material comprising:
a sheet material;
a frame portion which is molded so as to surround an outer periphery of the sheet material, and is formed by solidifying an injection molding material containing reinforcing fibers; and
a rib which is molded on an inner peripheral side of the frame portion so as to divide a space on the inner peripheral side, and is formed by solidifying the injection molding material containing the reinforcing fibers,
wherein a thin film portion thinner than thicknesses of the frame portion and the rib is molded on an entire surface of one surface of the sheet material except for a region where the frame portion and the rib are molded.

8. The composite material according to claim 6,
wherein a bypass rib that bridges the frame portion and the rib is molded.

9. The composite material according to claim 6,
wherein a plurality of gate marks through which the injection molding material is injected are formed in the frame portion, the rib, or both thereof.

10. The composite material according to any one of claims 6 to 9,
wherein the rib is molded so as to traverse a center portion of one surface of the sheet material, and
a gate mark through which the injection molding material is injected is formed at a position corresponding to the center portion of the rib.
